# EUROPEAN PATENT APPLICATION

(11) **EP 4 221 154 A1**
(43) Date of publication of application: **02.08.2023**
(21) Application number: 21884656.6
(22) Date of filing: 31.08.2021
(51) Int. Cl.: H04L 65/40

(54) **DEVICE MANAGEMENT METHOD AND APPARATUS**

(30) Priority: 29.10.2020 CN 202011182405
(71) Applicant: Petal Cloud Technology Co., Ltd., Dongguan, Guangdong 523799 (CN)
(72) Inventor: WANG, Changjian, Shenzhen, Guangdong 518129 (CN)
(74) Representative: Gill Jennings & Every LLP
(86) International application number: PCT/CN2021/115531
(87) International publication number: WO 2022/088924

(57) **Abstract**

A device management method and apparatus are provided. The method includes: A first device sends a scanning signal, and an answering device sends an answer signal to the first device based on the received scanning signal. The first device determines, based on the received answer signal, that an area to which the answering device belongs and that is recorded in system device information obtained by the first device from a second device is incorrect, and sends an update indication to the second device. The update indication is used to indicate the second device to update the area to which the answering device belongs and that is recorded in the system device information stored in the second device. The technical solutions help improve accuracy of an area to which each Internet of Things device belongs and that is recorded in the system device information stored in the second device. When a terminal device receives a control instruction from a user, the terminal device can effectively control an Internet of Things device corresponding to the control instruction based on the relatively accurate system device information recorded in the second device.

## Description

### CROSS-REFERENCE TO RELATED APPLICATIONS

This application claims priority to Chinese Patent Application No. 202011182405.3, filed with China National Intellectual Property Administration on October 29, 2020 and entitled "DEVICE MANAGEMENT METHOD AND APPARATUS", which is incorporated herein by reference in its entirety.

### TECHNICAL FIELD

This application relates to the technical field of Internet of Things (Internet of Things, loT), and in particular, to a device management method and apparatus.

### BACKGROUND

With advancement of science and technology, Internet of Things devices are gradually popularized. For example, lights, switch panels, televisions, air purifiers, air conditioners, and fans can be connected to the Internet. A user can manage these devices together by using a home router network. Smart home vendors in the industry provide an application (application, APP) entry-based device management capability.

The user may set an area to which an Internet of Things device belongs by using an app (app for short) in a terminal device, so that a server corresponding to the app records corresponding setting information. The terminal device may control a corresponding Internet of Things device based on a record in the server and in response to a control instruction of the user. However, the user may not set or correctly set the area to which the Internet of Things device belongs in the app. As a result, the area to which the Internet of Things device belongs and that is recorded in the server is incorrect. When the user delivers, to the terminal device, a control instruction, especially a voice control instruction, for controlling the Internet of Things device, the terminal device cannot effectively control the Internet of Things device based on the record in the server. For example, a table lamp is actually disposed in a living room, but an area to which the table lamp belongs is set as a bedroom in the app by the user, and when the user delivers, to the terminal device, a control instruction for controlling the table lamp in the living room, the terminal device cannot effectively control the table lamp based on the record in the server.

### SUMMARY

This application provides a device management method and apparatus, to improve accuracy of an area to which each Internet of Things device belongs and that is recorded in a server, and help avoid a problem that a terminal device cannot effectively control the Internet of Things device based on a control instruction of a user.

According to a first aspect, this application provides a device management method. The method includes: A first device sends a scanning signal, and an answering device sends an answer signal to the first device based on the received scanning signal; and the first device determines, based on the received answer signal, that an area to which the answering device belongs and that is recorded in system device information obtained by the first device from a second device is incorrect, and sends an update indication to the second device. The update indication is used to indicate the second device to update the area to which the answering device belongs and that is recorded in the system device information stored in the second device.

In the foregoing technical solution, the first device determines, by using the answer signal received from the answering device, whether the area to which the answering device belongs and that is recorded in the system device information obtained from the second device is correct. If the area to which the answering device belongs is incorrect, the first device sends the update indication to the second device. The second device updates, based on the update indication, the system device information stored in the second device, to improve accuracy of an area to which each Internet of Things device belongs and that is recorded in the system device information stored in the second device. When a terminal device receives a control instruction from a user, the terminal device can effectively control an Internet of Things device corresponding to the control instruction based on the relatively accurate system device information recorded in the second device.

In a possible implementation, that the area to which the answering device belongs and that is recorded in the system device information obtained by the first device from the second device is incorrect includes: The first device determines, based on the answer signal, an area to which the answering device actually belongs; and the first device obtains device information of the answering device, and determines, based on the device information of the answering device, that the area to which the answering device belongs and that is recorded in the system device information obtained by the first device from the second device is inconsistent with the area to which the answering device actually belongs.

In the foregoing technical solution, the first device may relatively accurately determine, based on the answer signal, the area to which the answering device actually belongs. In addition, the first device may be located in a different area, and communicate with a different Internet of Things device in the different area, to determine an area to which the different Internet of Things device actually belongs. After determining the area to which the answering device actually belongs, the first device may compare the area to which the answering device actually belongs with the area to which the answering device belongs and that is recorded in the system device information obtained by the first device from the second device, to determine whether the area to which the answering device belongs and that is recorded in the system device information stored in the second device is correct.

In a possible implementation, that the first device obtains device information of the answering device includes: The first device obtains first information from the answering device, where the first information includes a public key and storage location information; the first device obtains, based on the storage location information, encrypted information from the second device, where the encrypted information is obtained by encrypting the device information of the answering device by the second device; and the first device decrypts, based on the public key, the encrypted information, to obtain the device information of the answering device.

In a possible implementation, that the first device obtains first information from the answering device includes: The first device sends a first request to the answering device, where the first request is used to indicate the answering device to send the device information of the answering device to the second device; and the first device receives the first information from the answering device.

In a possible implementation, that the first device obtains, based on the storage location information, encrypted information from the second device includes: The first device sends a second request to the second device, where the second request includes the storage location information, and the second request is used by the first device to request the encrypted information from the second device; and the first device receives the encrypted information from the second device.

In the foregoing technical solution, the first device does not directly obtain the device information of the answering device from the answering device, but first obtains the first information from the answering device, then obtains, from the second device based on the storage location information in the first information, the encrypted information corresponding to the storage location information, and then decrypts the encrypted information by using the public key in the first information, to obtain the device information of the answering device. When the first device obtains the encrypted information from the second device, the second device may verify device information of the first device, and determine that a user to which the first device belongs is an authorized user and is the same as a user to which the answering device belongs. In this way, it is ensured that only the first device that is verified can determine whether the area to which the answering device belongs in the system device information stored in the second device is correct, and send the update indication to the second device, thereby improving security of an entire system.

In a possible implementation, that the first device determines, based on the answer signal, an area to which the answering device actually belongs includes: The first device measures a signal strength of the answer signal, and if it is determined that the signal strength of the answer signal is greater than a specified threshold, determines that the area to which the answering device actually belongs is the same as an area to which the first device belongs.

In the foregoing technical solution, because the first device can determine an area to which the first device currently moves, the first device may determine, based on the signal strength of the answer signal, whether the answering device and the first device belong to a same area, to determine the area to which the answering device belongs. In this way, the first device can determine, in a movement process, actual areas to which Internet of Things devices in each area belong, to determine whether areas to which the Internet of Things devices belong and that are recorded in the system device information stored in the second device are correct, and correct areas to which the Internet of Things devices belong and that are not correctly recorded.

In a possible implementation, that the first device sends an update indication to the second device includes: The first device sends the update indication to the second device based on the device information of the answering device and the area to which the answering device actually belongs.

In a possible implementation, that the first device obtains the system device information from the second device includes: The first device sends a third request to the second device, where the third request includes device information of the first device, and the third request is used by the first device to request the system device information from the second device; and the first device receives the system device information from the second device.

In the foregoing technical solution, when requesting the system device information from the second device, the first device sends the device information of the first device to the second device. The second device may verify, based on the device information of the first device, a user to which the first device belongs, that is, verify identity information of the first device, thereby helping improve security of an entire system.

In a possible implementation, that the first device receives the answer signal sent by the answering device in response to the scanning signal includes: The first device receives a plurality of answer signals, where any one of the plurality of answer signals includes a temporary identifier of the answering device that sends the answer signal; and the first device determines, based on temporary identifiers in the plurality of answer signals, at least one answer signal from a same answering device.

In the foregoing technical solution, to improve accuracy, the first device may send at least one answer signal in one area, and a plurality of answering devices may respond to the scanning signal, and send corresponding answer signals to the first device. The answering device may include, in the answer signal, a temporary identifier randomly generated by the answering device, so that the first device determines at least one answer signal from a same answering device, and determines, based on the at least one answer signal from the same answering device, the area to which the answering device actually belongs. In this way, there is no need to directly carry the device information of the answering device in the answer signal, which helps improve system security.

In a possible implementation, the method further includes: The first device determines an operating mode of a coordinating device based on an operating mode of the first device; and the first device sends, to the coordinating device, a control signal that indicates the operating mode of the coordinating device.

In the foregoing technical solution, when moving to a different area, the first device may determine, based on a current operating mode, a device that performs coordinating, and a user does not need to deliver a control instruction, so that the Internet of Things device is controlled more effectively.

In a possible implementation, the first device is a robotic vacuum cleaner. The robotic vacuum cleaner sends a scanning signal, and the scanning signal may be a short-range broadcast packet based on a constrained application protocol (the constrained application protocol, COAP). An Internet of Things device that receives and responds to the scanning signal is the answering device. The robotic vacuum cleaner can move to any one of a plurality of areas in an operating process (a cleaning process), to determine an actual area to which each Internet of Things device belongs. The robotic vacuum cleaner may further update the area to which the answering device belongs in the system device information stored in the server, to help improve accuracy of the area to which each Internet of Things device belongs and that is recorded in the system device information, and avoid a problem that the terminal device cannot effectively control the Internet of Things device when the user sends a control instruction, especially a voice control instruction, to the terminal device. No new hardware module needs to be added, and only an interactive interface is added to the original robotic vacuum cleaner and a software version is upgraded, thereby reducing costs.

According to a second aspect, this application provides a device management method. The method includes: A second device receives an update indication, where the update indication is sent by a first device after the first device determines that an area to which an answering device belongs and that is recorded in system device information obtained by the first device from the second device is incorrect; and the second device updates, based on the update indication, the area to which the answering device belongs and that is recorded in the system device information stored in the second device.

In a possible implementation, the method further includes: The second device receives device information of the answering device, encrypts the device information of the answering device by using a private key to obtain encrypted information, and sends second information to the answering device, where the second information includes a public key for decrypting the encrypted information and storage location information of the encrypted information.

In a possible implementation, after the second device sends the second information to the answering device, the method further includes: The second device receives a second request including the storage location information from the first device, and sends, based on the storage location information, the encrypted information to the first device.

In a possible implementation, the method further includes: The second device receives a third request from the first device, where the third request includes device information of the first device, and the third request is used to request the system device information stored in the second device; and the second device determines, based on the device information of the first device in the third request, that a user to which the first device belongs is an authorized user, and sends the system device information stored in the second device to the first device.

In a possible implementation, that the second device updates, based on the update indication, the area to which the answering device belongs and that is recorded in the system device information stored in the second device includes: The second device updates, based on an area to which the answering device actually belongs in the update indication, the area to which the answering device belongs and that is recorded in the system device information stored in the second device.

In a possible implementation, before the second device updates the area to which the answering device belongs and that is recorded in the system device information stored in the second device, the method further includes: The second device sends an update request to a terminal device based on the update indication, where the update request is used to indicate the terminal device to display prompt information, and the prompt information is used to prompt the user whether to agree to update the system device information stored in the second device; and the second device receives an update response, where the update response is sent by the terminal device in response to a user instruction, and the update response indicates that the user agrees to update the system device information stored in the second device.

According to a third aspect, this application provides a device management method, including: A first device sends a scanning signal; the first device receives an answer signal sent by an answering device in response to the scanning signal; the first device determines, based on the answer signal, an area to which the answering device actually belongs, and sends area information to a second device, where the area information includes the area to which the answering device actually belongs; and the first device sends a first request to the answering device and sends device information of the answering device to the second device, where the first request is used to indicate the answering device to send the device information of the answering device to the second device, or the first request is used by the first device to request the device information of the answering device from the answering device.

In the foregoing technical solution, the first device determines, by using the answer signal received from the answering device, the area to which the answering device actually belongs, and sends, to the second device, the area information indicating the area to which the answering device actually belongs. Then, the first device obtains the device information of the answering device from the answering device and sends the device information to the second device, or the first device indicates the answering device to send the device information of the answering device to the second device. Correspondingly, the second device determines, based on the received area information and the device information of the answering device, whether the area to which the answering device belongs and that is recorded in the system device information stored in the second device is correct, which helps improve accuracy of an area to which each Internet of Things device belongs and that is recorded in the system device information stored in the second device. When a terminal device receives a control instruction from a user, the terminal device can effectively control an Internet of Things device corresponding to the control instruction based on the relatively accurate system device information recorded in the second device.

In a possible implementation, that the first device determines, based on the answer signal, an area to which the answering device actually belongs includes: The first device measures a signal strength of the answer signal, and if it is determined that the signal strength of the answer signal is greater than a specified threshold, determines that the area to which the answering device actually belongs is the same as an area to which the first device belongs.

In a possible implementation, the method further includes: The first device determines an operating mode of a coordinating device based on an operating mode of the first device; and the first device sends, to the coordinating device, a control signal that indicates the operating mode of the coordinating device.

In a possible implementation, that the first device receives an answer signal sent by an answering device in response to the scanning signal includes: The first device receives a plurality of answer signals, where any one of the plurality of answer signals includes a temporary identifier of the answering device that sends the answer signal; and the first device determines, based on temporary identifiers in the plurality of answer signals, at least one answer signal from a same answering device.

In a possible implementation, the first device is a robotic vacuum cleaner.

In a possible implementation, the scanning signal is a COAP-based short-range broadcast packet.

According to a fourth aspect, this application provides a device management method, including: A second device receives area information from a first device, where the area information includes an area to which an answering device actually belongs, and the area to which the answering device actually belongs is determined by the first device; the second device receives device information of the answering device from the answering device or from the first device; and the second device updates, based on the device information of the answering device and the area information, an area to which the answering device belongs and that is recorded in system device information stored in the second device.

In a possible implementation, before the second device updates the area to which the answering device belongs and that is recorded in the system device information stored in the second device, the method further includes: The second device sends an update request to a terminal device based on the update indication, where the update request is used to indicate the terminal device to display prompt information, and the prompt information is used to prompt the user whether to agree to update the system device information stored in the second device; and the second device receives an update response, where the update response is sent by the terminal device in response to a user instruction, and the update response indicates that the user agrees to update the system device information stored in the second device.

According to a fifth aspect, this application provides a device management apparatus, including: one or more processors, one or more memories, and a transceiver. The one or more memories are coupled to the one or more processors, and the memory is configured to store instructions that, when executed by the processor, cause the apparatus to perform the method according to any one of the first aspect or the possible implementations of the first aspect.

According to a sixth aspect, this application provides a device management apparatus, including: one or more processors, one or more memories, and a transceiver. The one or more memories are coupled to the one or more processors, and the memory is configured to store instructions that, when executed by the processor, cause the apparatus to perform the method according to any one of the second aspect or the possible implementations of the second aspect.

According to a seventh aspect, this application provides a device management apparatus, including: one or more processors, one or more memories, and a transceiver. The one or more memories are coupled to the one or more processors, and the memory is configured to store instructions that, when executed by the processor, cause the apparatus to perform the method according to any one of the third aspect or the possible implementations of the third aspect.

According to an eighth aspect, this application provides a device management apparatus, including: one or more processors, one or more memories, and a transceiver. The one or more memories are coupled to the one or more processors, and the memory is configured to store instructions that, when executed by the processor, cause the apparatus to perform the method according to any one of the fourth aspect or the possible implementations of the fourth aspect.

According to a ninth aspect, this application provides a computer-readable storage medium. The computer-readable storage medium stores a computer program or instructions. When the computer program or the instructions are executed by a device management apparatus, the device management apparatus is enabled to perform the method according to any one of the first aspect or the possible implementations of the first aspect, or perform the method according to any one of the second aspect or the possible implementations of the second aspect, or perform the method according to any one of the third aspect or the possible implementations of the third aspect, or perform the method according to any one of the fourth aspect or the possible implementations of the fourth aspect.

According to a tenth aspect, this application provides a device management system, including a first device configured to perform the method according to any one of the first aspect or the possible implementations of the first aspect, and a second device configured to perform the method according to any one of the second aspect or the possible implementations of the second aspect.

According to an eleventh aspect, this application provides a device management system, including a first device configured to perform the method according to any one of the third aspect or the possible implementations of the third aspect, and a second device configured to perform the method according to any one of the fourth aspect or the possible implementations of the fourth aspect.

According to a twelfth aspect, this application provides a device management system, including the device management apparatus according to the fifth aspect and the device management apparatus according to the sixth aspect.

According to a thirteenth aspect, this application provides a device management system, including the device management apparatus according to the seventh aspect and the device management apparatus according to the eighth aspect.

For beneficial effects that are not described in detail in any one of the second aspect to the thirteenth aspect, refer to description of beneficial effects in the first aspect, and details are not described herein again.

### BRIEF DESCRIPTION OF DRAWINGS

FIG. 1 is a schematic diagram of actually deployed Internet of Things devices in a home scenario according to an example of this application;
FIG. 2 is a schematic diagram of areas to which Internet of Things devices belong and that are recorded in a server according to an example of this application;
FIG. 3 is a schematic diagram of an architecture of an Internet of Things system according to an example of this application;
FIG. 4 is a schematic diagram of an internal structure of a server according to an example of this application;
FIG. 5 is a schematic diagram of an internal structure of a robotic vacuum cleaner according to an example of this application;
FIG. 6 is a schematic flowchart of a first device management method according to an example of this application;
FIG. 7 is a schematic diagram of sending, by an answering device, an answer signal to a robotic vacuum cleaner according to an example of this application;
FIG. 8 is a schematic flowchart of determining whether system device information is correct according to an embodiment of this application;
FIG. 9 is a schematic flowchart of determining, by a robotic vacuum cleaner, a device identifier of an answering device according to an example of this application;
FIG. 10(a) and FIG. 10(b) are schematic diagrams of a set of display interfaces of a terminal device according to an example of this application;
FIG. 11 is a schematic flowchart of another device management method according to an example of this application; and
FIG. 12 is a schematic flowchart of a method for controlling a coordinating device according to an example of this application.

### DESCRIPTION OF EMBODIMENTS

The following describes the technical solutions in embodiments of this application with reference to the accompanying drawings in embodiments of this application. The terms "first" and "second" below in the description of the embodiments of this application are merely used for a description purpose, and shall not be understood as an indication or implication of relative importance or implicit indication of a quantity of indicated technical features. Therefore, a feature limited by "first" or "second" may explicitly or implicitly include one or more features. In the description of embodiments of this application, unless otherwise specified, "a plurality of" means two or more than two.

A user may register an Internet of Things device with a server based on an app, in a terminal device, used to manage the Internet of Things device. The server records device information of the Internet of Things device, such as a device identifier, a device name, information about an area to which the device belongs, or a manufacturer.

The area to which the Internet of Things device belongs and that is recorded in the server may be inconsistent with an area to which the Internet of Things device actually belongs. In an example, in a registration process on the app, the user skips (skip) an operation step of selecting the area to which the Internet of Things device belongs. In this case, the terminal device may record, in the server, that the area to which the Internet of Things device belongs is blank, or record, in the server, that the Internet of Things device is disposed in a default area. For example, the server records that a television is disposed in a living room. In another example, although the user correctly sets the area to which the Internet of Things device belongs when registering the Internet of Things device, the Internet of Things device is moved from one area to another during use, and the area, in the app, to which the Internet of Things device belongs is not corrected.

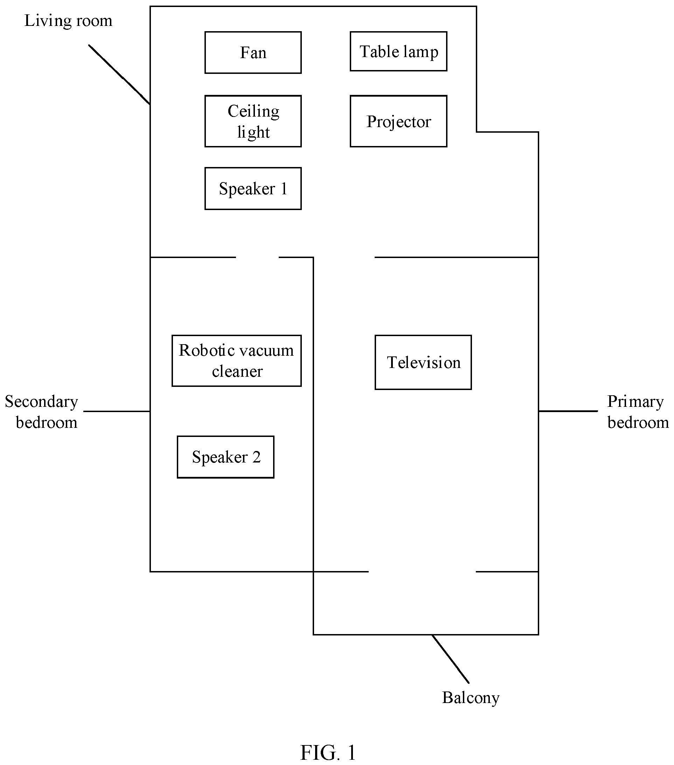

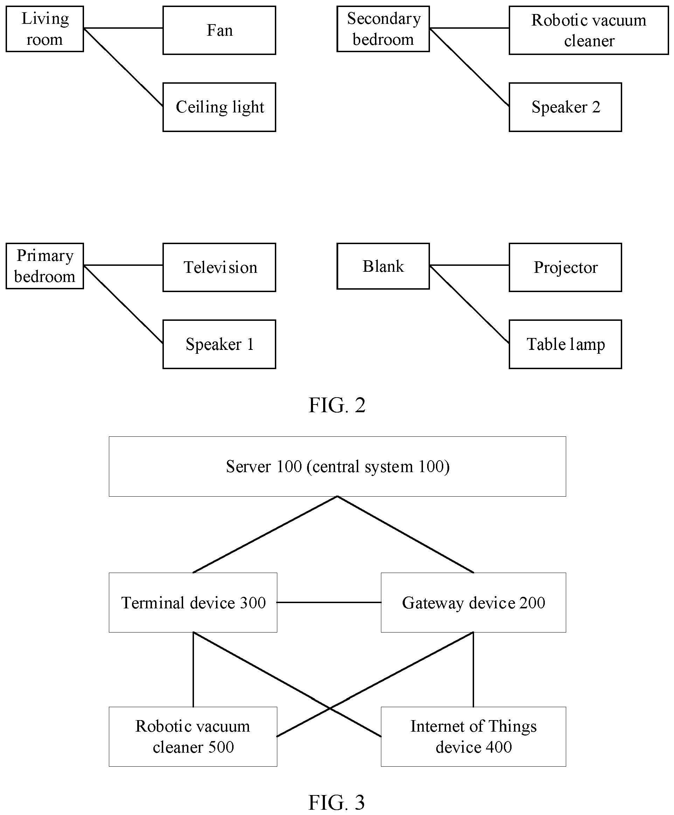

A home scenario is used as an example for description. FIG. 1 is a schematic diagram of actually deployed Internet of Things devices in a home scenario according to an example of this application. The home scenario includes a plurality of areas, namely a living room, a primary bedroom, a secondary bedroom, and a balcony. A fan, a table lamp, a ceiling light, a projector, and a speaker 1 are disposed in the living room, a television is disposed in the primary bedroom, a robotic vacuum cleaner and a speaker 2 are disposed in the secondary bedroom, and no Internet of Things device is disposed in the balcony. It should be noted that the robotic vacuum cleaner is a mobile robot. Although the robotic vacuum cleaner, as shown in FIG. 1, is located in the secondary bedroom, the robotic vacuum cleaner may be in any area during working. Areas to which the Internet of Things devices belong and that are recorded in the server may be shown in FIG. 2. An area to which the fan and ceiling light belong is set to be the living room, an area to which the television and speaker 1 belong is set to be the primary bedroom, an area to which the robotic vacuum cleaner and speaker 2 belong is set to be the secondary bedroom, and an area to which the projector and the table lamp belong is set to be blank.

In this example, although the user disposes the projector in the living room, the area to which the projector belongs and that is recorded in the server is blank. Although the user disposes the table lamp in the living room, the area to which the table lamp belongs and that is recorded in the server is blank. Although the user disposes the speaker 1 in the living room, the area to which the speaker 1 belongs and that is recorded in the server is the primary bedroom.

The user may deliver, to the terminal device, a control instruction for controlling an Internet of Things device, and the terminal device controls a corresponding Internet of Things device according to the received control instruction. Further, the terminal device relies on the area to which the Internet of Things device belongs and that is recorded in the server to control the Internet of Things device. For example, the user sends the voice control instruction "Turn on the fan in the living room" to the terminal device, and the terminal device determines, in response to the voice control instruction, the fan disposed in the living room from the record of the server, and then sends a turn-on instruction to the fan.

In the foregoing solution, if the area to which the Internet of Things device actually belongs is inconsistent with the area recorded in the server, when the user delivers the control instruction, especially the voice control instruction, to the terminal device, the terminal device cannot effectively control the Internet of Things device based on the record in the server. For example, the table lamp is actually disposed in the living room, but the area to which the table lamp belongs and that is recorded in the server is blank. When the user sends the voice control instruction "Turn on the table lamp in the living room" to the terminal device, the terminal device cannot determine, from the record in the server, the table lamp disposed in the living room, and cannot effectively control the table lamp in the living room. For another example, a preset rule "Turn on all lights in the living room when the user gets home" is configured in the terminal device. Although the table lamp is actually disposed in the living room, the area to which the table lamp belongs and that is recorded in the server is blank. When determining that the user gets home, the terminal device cannot determine the table lamp actually disposed in the living room, that is, cannot turn on the table lamp in the living room.

To resolve the foregoing problem, a plurality of sensors configured to locate the Internet of Things device may be provided in a home scenario. The plurality of sensors communicate with the Internet of Things device via a wireless network, and a relatively accurate location of the Internet of Things device is determined based on a measured change of a communication threshold of the Internet of Things device. In this technical solution, a location of the Internet of Things device can be determined and an area to which the Internet of Things device belongs can be updated without requiring the user to input any data. However, the sensor is a dedicated hardware device and is mainly built in a wall, which makes it difficult to be applied to a domestic household that has already finished decoration.

In view of this, this application provides a device management method. A robotic vacuum cleaner determines an area to which an Internet of Things device actually belongs, and updates, based on the determined area to which the Internet of Things device actually belongs, an area to which the Internet of Things device belongs and that is not correctly recorded in a server. This helps improve accuracy of an area to which each Internet of Things device belongs and that is recorded in the server, and helps avoid a problem that a terminal device cannot effectively control the Internet of Things device based on a control instruction of a user. In this application, the Internet of Things device is specifically another Internet of Things device different from a robotic vacuum cleaner, where an area to which the device actually belongs needs to be determined.

FIG. 3 is a schematic diagram of an architecture of an Internet of Things system to which an embodiment of this application is applicable. The Internet of Things system includes a server 100, a gateway device 200, a terminal device 300, an Internet of Things device 400, and a robotic vacuum cleaner 500.

The server 100 may be a server or a server cluster. Optionally, the server 100 is a cloud server. The server 100 may be configured for device registration, device connection, device control, and the like of the Internet of Things device 400, and may be further configured for account authentication, push service management, plug-in market and hardware version upgrade, and the like of the Internet of Things device 400. The server 100 records device information of the Internet of Things device 400 registered with the server 100.

It should be noted that, in FIG. 3, the server 100 may be replaced by a central system 100. The central system 100 may be understood as a local system having a processing capability in the Internet of Things system, and the central system 100 may implement a related function of the server 100. For example, the central system 100 is a terminal device that is not connected to a public network, for example, a mobile phone or tablet computer that is not connected to the public network. The central system 100 may communicate with the terminal device 300, the Internet of Things device 400, or the robotic vacuum cleaner 500 via a wireless local area network (wireless local area networks, WLAN). When the central system is used in the Internet of Things system, device information or user information is not uploaded to the public network, so that data security can be improved. The central system 100 and the terminal device 300 may be a same device or different devices.

The gateway device 200 may be a router, a standalone hub (Hub), a combination of a router and a hub, or the like, and is configured to provide a wireless local area network for the terminal device 300 and/or the Internet of Things device 400.

The terminal device 300 may also be referred to as a terminal, user equipment (user equipment, UE), a mobile station, a mobile terminal, or the like. The terminal device 300 may be a portable device, for example, a mobile phone, a tablet computer, or a wearable device (for example, a smart watch) having a wireless communication function. An example embodiment of the portable device includes but is not limited to a portable device provided with iOS^{®}, Android^{®}, Microsoft^{®}, or another operating system. It should be understood that, in some other embodiments of this application, the terminal device 300 may not be a portable device, but a desktop computer having an algorithm computation capability. An app is installed in the terminal device 300. The user may register, add, delete, modify, and control the Internet of Things device 400 by using the app.

The Internet of Things device 400 is connected to the server 100 via the terminal device 300 or the gateway device 200. There may be a plurality of Internet of Things devices 400. The Internet of Things devices 400 are, for example, a table lamp, a fan, an air conditioner, a television, a switch panel, a socket, a purifier, a projector, a speaker, and a ceiling light.

In an operating process, the robotic vacuum cleaner 500 determines an area to which the Internet of Things device 400 actually belongs by performing short-range communication with the Internet of Things device 400, and then updates, based on the determined area to which the Internet of Things device 400 actually belongs, the area to which the Internet of Things device 400 belongs and that is not correctly recorded in the server 100.

It should be noted that the robotic vacuum cleaner 500 may alternatively be another mobile device, for example, a bionic robot, a programmable robot, a self-walking vacuum cleaner, or a device specially configured to locate a surrounding Internet of Things device.

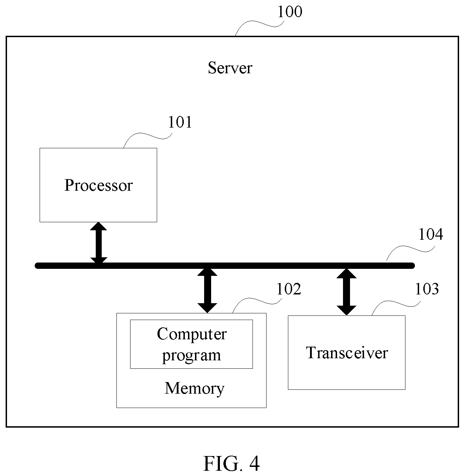

With reference to the schematic diagram of the architecture of the Internet of Things system shown in FIG. 3, FIG. 4 is a schematic diagram of an internal structure of a server 100 according to an example of this application. As shown in FIG. 4, the server 100 may include a processor 101, a memory 102, and a transceiver 103. One or more computer programs are stored in the memory 102 and are configured to be executed by one or more processors 101.

The processor 101 may be a central processing unit (central processing unit, CPU), a digital processing unit, or the like. The processor 101 connects all parts of the entire server 100 by using various interfaces and circuits, and performs various functions of the server 100 by running or executing the computer program stored in the memory 102.

A specific connection medium between the processor 101 and the memory 102 is not limited in this embodiment of this application. In this embodiment of this application, the memory 102, the processor 101, and the transceiver 103 are connected by using a bus 104 in FIG. 4. The bus is represented by using a thick line in FIG. 4, and connections between other components are merely examples for description, and shall not be construed as a limitation. The bus may be classified into an address bus, a data bus, a control bus, and the like. For ease of indication, the bus is indicated by using only one thick line in FIG. 4. However, this does not indicate that there is only one bus or only one type of bus.

The memory 102 may be a volatile memory (volatile memory), for example, a random access memory (random-access memory, RAM). The memory 102 may alternatively be a non-volatile memory (non-volatile memory), for example, a read-only memory, a flash memory (flash memory), a hard disk drive (hard disk drive, HDD), or a solid-state drive (solid-state drive, SSD). Alternatively, the memory 102 is any other medium that can be used to carry or store program code having an instruction or data structure form and can be accessed by a computer, which is not limited thereto. The memory 102 may be a combination of the foregoing memories.

Certainly, the diagram of the internal structure of the server 100 may also be applicable to the central system 100.

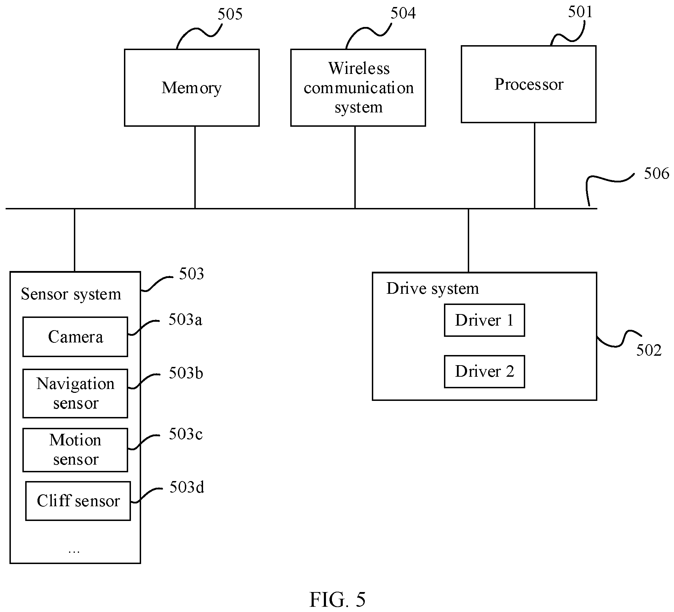

FIG. 5 is a schematic diagram of an internal structure of a robotic vacuum cleaner 500 according to an example of this application. As shown in FIG. 5, the robotic vacuum cleaner 500 includes a processor 501, a drive system 502, a sensor system 503, a wireless communication system 504, and a memory 505. The foregoing components may be connected by using one or more communication buses 506.

The drive system 502 includes a driver 1 and a driver 2, and the drive system 502 is configured to drive the robotic vacuum cleaner to move.

The wireless communication system 504 is configured to establish a network connection to the terminal device 300 or the gateway device 200.

The sensor system 503 includes a camera 503a configured to shoot or scan environmental information. The camera 503a may be a high-definition camera with a wide-angle lens, for example, a high-definition wide-angle camera of a fisheye lens type.

The sensor system 503 may further include a navigation sensor 503b, a motion sensor 503c, and a cliff sensor 503d.

The navigation sensor 503b is configured to calculate a spatial location of the robotic vacuum cleaner, and is configured to generate a map. The navigation sensor 503b may be specifically a dead reckoning sensor, an obstacle detection and avoidance sensor, a positioning and mapping sensor, or the like.

The motion sensor 503c is configured to generate a signal indicating a motion of the robotic vacuum cleaner. For example, the motion signal may include a moving distance, a rotation amount, a speed, and/or an acceleration of the robotic vacuum cleaner.

The cliff sensor 503d is configured to detect an obstacle (for example, a threshold or a stair) below the robotic vacuum cleaner. In response to a signal from the cliff sensor 503d, the processor 501 navigates the robotic vacuum cleaner away from a detected obstacle.

It should be noted that, in addition to the sensors shown in FIG. 5, the sensor system 503 may further include other types of sensors such as an anti-skid sensor or an infrared anti-collision sensor, and no further examples are given in the embodiments of this application.

The processor 501 runs a computer program stored in the memory 505.

Certainly, the diagram of the internal structure of the robotic vacuum cleaner 500 may also be applicable to another mobile device, for example, a bionic robot, a programmable robot, a self-walking vacuum cleaner, or a device specially configured to locate a surrounding Internet of Things device.

System architectures and application scenarios described in this application are intended to describe technical solutions in this application more clearly, and do not constitute a limitation on the technical solutions provided in this application. A person of ordinary skill in the art may know that, with evolution of the system architectures and emergence of a new service scenario, the technical solutions provided in this application are also applicable to a similar technical problem.

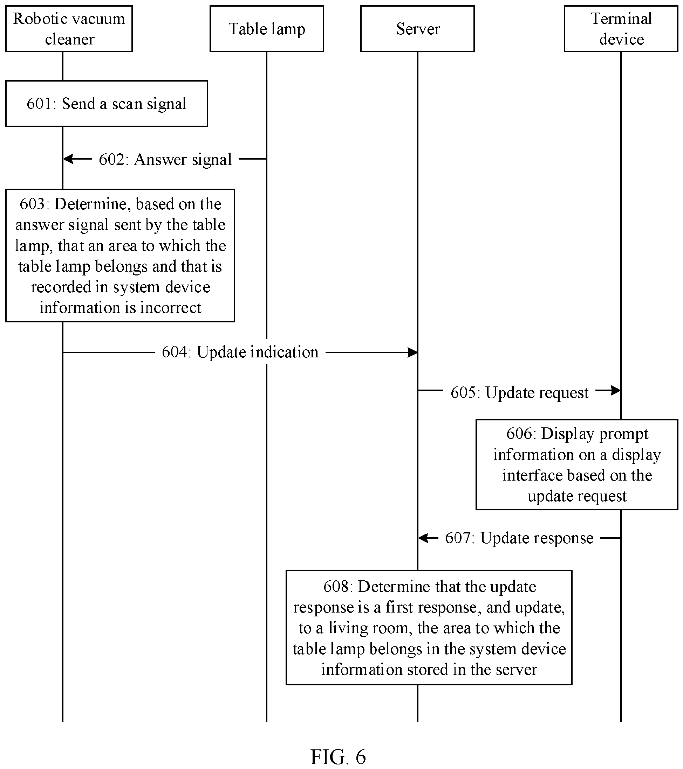

FIG. 6 is a schematic flowchart of a device management method according to an example of this application. The device management method may be described by using the robotic vacuum cleaner 500 and the server 100 in FIG. 3 as an example. With reference to FIG. 1 and FIG. 2, a robotic vacuum cleaner may move to a living room, and the robotic vacuum cleaner communicates with a table lamp to determine an area to which the table lamp actually belongs, and when determining that a server does not correctly record an area to which the table lamp belongs, updates the area to which the table lamp belongs and that is not correctly recorded in the server.

Step 601: The robotic vacuum cleaner sends a scanning signal.

The robotic vacuum cleaner may enter a working state after receiving a working instruction of a user, or may enter a working state based on a scheduled task. The robotic vacuum cleaner may clean each area based on a preset map, a preset path, or a random path. With reference to FIG. 1, the preset map includes a plurality of areas, and each area is marked with an area name. A preset path is secondary bedroom → living room → primary bedroom → balcony, and a cleaning sequence of the robotic vacuum cleaner is secondary bedroom → living room → primary bedroom → balcony.

The preset map may be manually input by the user into the robotic vacuum cleaner, or may be learned by the robotic vacuum cleaner during operating. In a latter implementation, the robotic vacuum cleaner may determine a map by using a detection function of the robotic vacuum cleaner, and the map includes a plurality of areas. Then, the robotic vacuum cleaner displays the map including the plurality of areas to the user, and the user names the plurality of areas on the map in a customized manner. For example, the robotic vacuum cleaner detects a map shown in FIG. 1. The map includes four areas, and the user names the four areas as the living room, the primary bedroom, the secondary bedroom, and the balcony. The robotic vacuum cleaner may use a map marked with area names as the preset map.

In this application, the robotic vacuum cleaner may determine the map by using the detection function of the robotic vacuum cleaner, and determine, based on the preset map and a moving path, an area to which the robotic vacuum cleaner currently belongs. For implementation, refer to the prior art.

The robotic vacuum cleaner determines that an area to which the robotic vacuum cleaner currently belongs is the living room. The robotic vacuum cleaner sends a scanning signal in the living room, and the scanning signal may be a COAP-based short-range broadcast packet. For example, a scanning range of the scanning signal may be several meters or a dozen meters.

Step 602: The table lamp sends an answer signal to the robotic vacuum cleaner.

At least one Internet of Things device in the living room, for example, the table lamp, the fan, or the ceiling light, may receive the scanning signal from the robotic vacuum cleaner. In addition, an Internet of Things device in another area, for example, a speaker 2 in the secondary bedroom or a television in the primary bedroom, may also receive the scanning signal from the robotic vacuum cleaner. Each Internet of Things device may send an answer signal to the robotic vacuum cleaner based on the received scanning signal. The answer signal may also be referred to as a response signal or an answer response.

In the following, an Internet of Things device that replies with an answer signal may be collectively referred to as an answering device. To improve accuracy, the robotic vacuum cleaner may send scanning signals at different locations in the living room. Correspondingly, at least one answering device receives the scanning signals sent by the robotic vacuum cleaner at different locations, and sends, to the robotic vacuum cleaner, answer signals corresponding to the scanning signals.

To distinguish which answer signals are from a same answering device, an answer signal sent by an answering device may include a temporary identifier of the answering device.

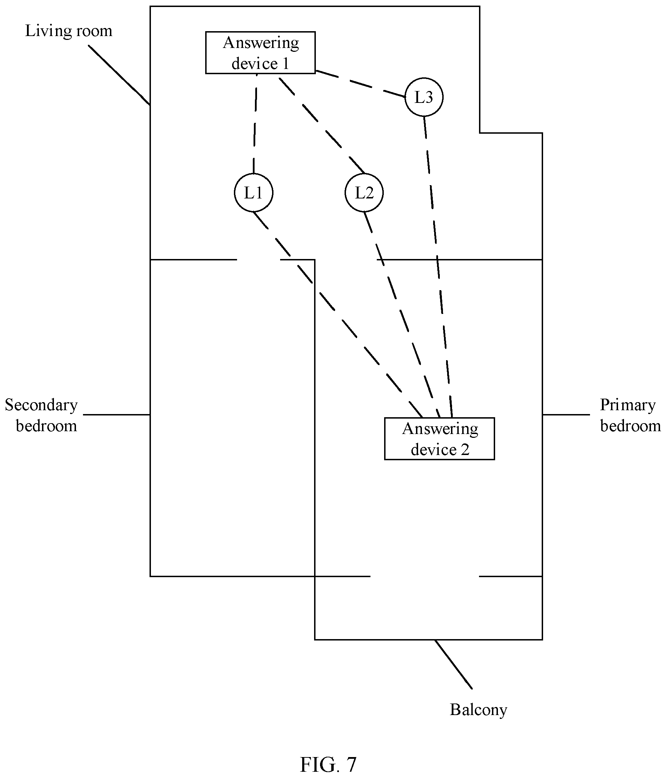

FIG. 7 is a schematic diagram of sending, by the answering device, the answer signal to the robotic vacuum cleaner according to an example of this application. As shown in FIG. 7, circles L 1, L2, and L3 respectively represent a location 1, a location 2, and a location 3 to which the robotic vacuum cleaner moves in the living room. The robotic vacuum cleaner sequentially sends a scanning signal 1, a scanning signal 2, and a scanning signal 3 at the location 1, the location 2, and the location 3.

Specifically, the robotic vacuum cleaner sends the scanning signal 1 at the location 1, an answering device 1 receives the scanning signal 1 and sends an answer signal 11 (including a temporary identifier 1) to the robotic vacuum cleaner, and an answering device 2 receives the scanning signal 1 and sends an answer signal 12 (including a temporary identifier 2) to the robotic vacuum cleaner.

The robotic vacuum cleaner sends the scanning signal 2 at the location 2, the answering device 1 receives the scanning signal 2 and sends an answer signal 21 (including the temporary identifier 1) to the robotic vacuum cleaner, and the answering device 2 receives the scanning signal 2 and sends an answer signal 22 (including the temporary identifier 2) to the robotic vacuum cleaner.

The robotic vacuum cleaner sends the scanning signal 3 at the location 3, the answering device 1 receives the scanning signal 3 and sends an answer signal 31 (including the temporary identifier 1) to the robotic vacuum cleaner, and the answering device 2 receives the scanning signal 3 and sends an answer signal 32 (including the temporary identifier 2) to the robotic vacuum cleaner.

The robotic vacuum cleaner determines, based on the answer signal 11, the answer signal 21, and the answer signal 31 that all include the temporary identifier 1, that the three answer signals are from a same answering device. The robotic vacuum cleaner determines, based on the answer signal 12, the answer signal 22, and the answer signal 32 that all include the temporary identifier 2, that the three answer signals are from a same answering device.

It should be noted that the temporary identifier in the answer signal sent by the answering device is randomly generated by the answering device, and the robotic vacuum cleaner cannot obtain identity information of the answering device (which may also be referred to as device information of the answering device) based on the temporary identifier. The robotic vacuum cleaner needs to further determine the identity information of the answering device based on related description in the following step 603.

In this application, an example in which the table lamp in the living room is the answering device is used for description. In an optional implementation, the scanning signal may carry device information (for example, a device identifier of the robotic vacuum cleaner) of the robotic vacuum cleaner, and the device information of the robotic vacuum cleaner is used to indicate user identity information of a user to which the robotic vacuum cleaner belongs. After receiving the scanning signal, the table lamp determines, based on the device information of the robotic vacuum cleaner in the scanning signal, identity information of the user to which the robotic vacuum cleaner belongs. If it is determined that the robotic vacuum cleaner and the table lamp belong to a same user, it is determined that the table lamp is successfully paired with the robotic vacuum cleaner. In response to the scanning signal, the table lamp sends an answer signal including a temporary identifier of the table lamp to the robotic vacuum cleaner.

Step 603: The robotic vacuum cleaner determines, based on the answer signal sent by the table lamp, that an area to which the table lamp belongs and that is recorded in system device information is incorrect.

The robotic vacuum cleaner may obtain the system device information from the server in advance, and the system device information records an area to which an Internet of Things device belongs and that is set in the app.

In an optional implementation, the robotic vacuum cleaner may obtain the system device information (not shown in FIG. 6) from the server before step 603. Specifically, the robotic vacuum cleaner sends, to the server, a third request used to obtain the system device information. The third request includes the device information of the robotic vacuum cleaner, and the device information of the robotic vacuum cleaner is used to indicate the identity information of the user. The server determines, based on the device information of the robotic vacuum cleaner, the identity information of the user to which the robotic vacuum cleaner belongs. If it is determined that the user to which the robotic vacuum cleaner belongs is an authorized user, the server sends the system device information to the robotic vacuum cleaner.

With reference to the home scenario shown in FIG. 1, the system device information includes a correspondence shown in FIG. 2. For example, the system device information may be a device table or a device list. Table 1 shows an example of a device table provided in this application.

**Table 1**

| Internet of Things device | Device identifier | Area | Area identifier |
|---|---|---|---|
| Fan | 1 | Living room | A |
| Ceiling light | 2 | Living room | A |
| Television | 3 | Primary bedroom | B |
| Speaker 1 | 4 | Primary bedroom | B |
| Robotic vacuum cleaner | 5 | Secondary bedroom | C |
| Speaker 2 | 6 | Secondary bedroom | C |
| Projector | 7 | Blank | D |
| Table lamp | 8 | Blank | D |

It should be noted that Table 1 is used to better describe this embodiment of this application, and does not constitute a limitation on this application. In some other examples, the system device information may further be in the following form: (fan: 1, living room: A), (ceiling light: 2, living room: A), (television: 3, primary bedroom: B), (speaker 1: 4, primary bedroom: B), (robotic vacuum cleaner: 5, secondary bedroom: C), (speaker 2: 6, secondary bedroom: C), (projector: 7, blank: D), and (table lamp: 8; blank: D).

After receiving an answer signal sent by the at least one answering device, the robotic vacuum cleaner may first determine an answering device in the living room, and then determine identity information of the answering device in the living room, to determine, based on the identity information of the answering device, whether a record in the system device information is correct.

Specifically, after receiving the answer signal sent by the table lamp, the robotic vacuum cleaner may determine that the table lamp is in the living room, but cannot determine that an answering device that sends the answer signal is the table lamp. The robotic vacuum cleaner further determines that the identity information of the answering device is the table lamp, and then determines, based on the area to which the table lamp actually belongs, whether the area to which the table lamp belongs is correctly recorded in the system device information.

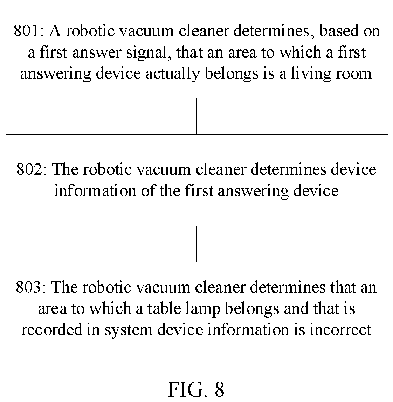

FIG. 8 is a schematic flowchart of determining whether an area to which a table lamp belongs in system device information is correct according to an embodiment of this application. The table lamp may be temporarily referred to as a first answering device, and an answer signal sent by the table lamp is referred to as a first answer signal.

Step 801: A robotic vacuum cleaner determines, based on the first answer signal, that an area to which the first answering device actually belongs is a living room.

Because an answer signal is affected by obstacles, a strength of an answer signal that is sent by an answering device in another area and that is received by the robotic vacuum cleaner is smaller than a strength of an answer signal sent by an answering device in the living room. In an example shown in FIG. 7, a strength of an answer signal received by the robotic vacuum cleaner from the answering device 1 is greater than a strength of an answer signal from the answering device 2. The robotic vacuum cleaner may determine, based on a strength of a received answer signal sent by the first answering device, whether the first answering device is in the living room, or determine whether the first answering device and the robotic vacuum cleaner are in a same area.

In an example, the robotic vacuum cleaner may determine, based on a signal strength of the first answer signal, whether the area to which the first answering device actually belongs is the living room. Specifically, if the robotic vacuum cleaner determines that the signal strength of the first answer signal is greater than a specified threshold, it is determined that the area to which the first answering device actually belongs is the living room. Otherwise, it is determined that the area to which the answering device actually belongs is not the living room. The specified threshold herein may be determined based on experience.

In another example, the robotic vacuum cleaner may send scanning signals at different locations in the living room. Correspondingly, the first answering device sends, to the robotic vacuum cleaner, a first answer signal corresponding to each scanning signal. If the robotic vacuum cleaner determines that signal strengths of a plurality of first answer signals are greater than the specified threshold, or that signal strengths of more than a preset proportion of first answer signals in the plurality of first answer signals are greater than the specified threshold, it is determined that the area to which the first answering device actually belongs is the living room. Otherwise, it is determined that the area to which the first answering device actually belongs is not the living room.

Step 802: The robotic vacuum cleaner determines device information of the first answering device.

The robotic vacuum cleaner may determine the device information of the first answering device. The device information is used to indicate identity information of the first answering device, and may be specifically a unique identifier of the device, for example, a product serial number (serial number, SN) of the device. For example, if the robotic vacuum cleaner determines that a device identifier of the first answering device is a device identifier of the table lamp, it may be determined that the first answering device is the table lamp.

By using an example in which the robotic vacuum cleaner determines the device identifier of the first answering device, this embodiment of this application provides at least the following two implementations. In addition, because the first answering device is actually the table lamp, for ease of description, the table lamp is directly used for description below.

In Implementation 1, the robotic vacuum cleaner sends a first request to the table lamp, where the first request is used to request the device identifier of the table lamp from the table lamp. The table lamp sends the device identifier of the table lamp to the robotic vacuum cleaner based on the received first request. In addition, the table lamp may further send other information to the robotic vacuum cleaner, such as a device name, an area, and a manufacturer of the table lamp.

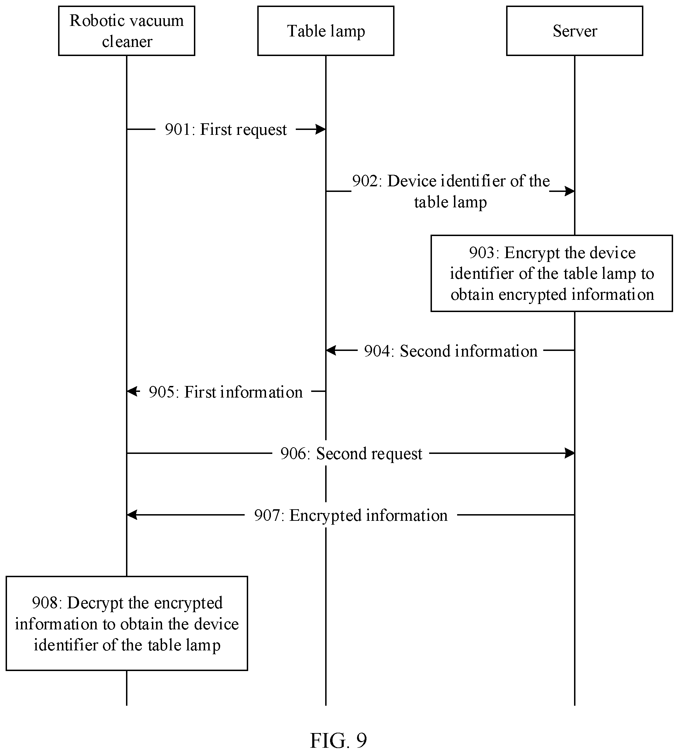

For Implementation 2, refer to FIG. 9, which is a schematic flowchart of determining, by a robotic vacuum cleaner, device identifier of an answering device according to an example of this application. A process is as follows.

Step 901: The robotic vacuum cleaner sends a first request to a table lamp.

Herein, the first request is used to indicate the table lamp to send a device identifier of the table lamp to a server.

Step 902: The table lamp sends the device identifier of the table lamp to the server in response to the first request.

Step 903: The server encrypts the device identifier of the table lamp to obtain encrypted information.

The server encrypts the device identifier of the table lamp based on a private key of the server to obtain the encrypted information. In addition, the server may further encrypt information such as a device identifier, a device name, area information, and a manufacturer of the table lamp to obtain the encrypted information.

The server stores the encrypted information to obtain storage location information corresponding to the encrypted information, and the storage location information is used to indicate a storage location at which the server stores the encrypted information. For example, the server stores the encrypted information in a form of a key-value (key-value) pair, and the obtained storage location information is a storage primary key (key).

Step 904: The server sends second information to the table lamp. The second information includes a public key corresponding to the private key and the storage location information corresponding to the encrypted information, where the public key is used to decrypt the encrypted information.

Step 905: The table lamp sends first information to the robotic vacuum cleaner.

The table lamp receives the second information, and sends the first information to the robotic vacuum cleaner based on the second information. The first information includes the public key and the storage location information. Correspondingly, the robotic vacuum cleaner receives the first information.

Step 906: The robotic vacuum cleaner sends a second request to the server.

The second request includes the device information of the robotic vacuum cleaner and the storage location information.

Step 907: The server sends the encrypted information to the robotic vacuum cleaner.

The server verifies, based on the device information of the robotic vacuum cleaner in the second request, user identity information of a user to which the robotic vacuum cleaner belongs. If it is determined that the user to which the robotic vacuum cleaner belongs is an authorized user, the server obtains the encrypted information based on the storage location information in the second request, and sends the encrypted information to the robotic vacuum cleaner.

Step 908: The robotic vacuum cleaner decrypts the encrypted information to obtain the device identifier of the table lamp.

Specifically, the robotic vacuum cleaner decrypts the received encrypted information based on the public key in the first information from the table lamp, to obtain the device identifier of the table lamp.

In Implementation 2, the table lamp does not directly respond to the robotic vacuum cleaner with the device identifier of the table lamp, but sends the device identifier of the table lamp to the server. The server returns the public key and the storage location information, so that the table lamp sends the public key and the storage location information to the robotic vacuum cleaner. The robotic vacuum cleaner obtains the encrypted information from the server based on the storage location information, and decrypts the encrypted information by using the public key to obtain the device identifier of the table lamp. In an obtaining process, the server may verify, based on the device information of the robotic vacuum cleaner, the user identity information of the user to which the robotic vacuum cleaner belongs, to ensure that the robotic vacuum cleaner is a device registered by the user, and that the robotic vacuum cleaner and the table lamp belong to a same user, thereby improving security.

Further, the server may temporarily store the encrypted information. That is, after the server stores the encrypted information for a preset duration or after the server triggers a preset condition (for example, sends the encrypted information to the robotic vacuum cleaner), the encrypted information may be deleted. In this way, storage space of the server is saved while security is improved.

Step 803: The robotic vacuum cleaner determines that the area to which the table lamp belongs and that is recorded in the system device information is incorrect.

If the robotic vacuum cleaner determines that the table lamp recorded in the system device information is not in the living room, it is determined that the area to which the table lamp belongs and that is recorded in the system device information is incorrect. For example, with reference to the foregoing Table 1, if the robotic vacuum cleaner determines, based on the device identifier of the table lamp, that the area to which the table lamp belongs and that is recorded in the system device information is blank and is inconsistent with the area (the living room) to which the table lamp actually belongs, it is determined that the area to which the table lamp belongs and that is recorded in the system device information is incorrect.

Step 604: The robotic vacuum cleaner sends an update indication to the server.

The update indication is used to indicate the server to update, to the living room, the area to which the table lamp actually belongs in the system device information stored in the server. For example, with reference to Table 1, the update indication includes a device identifier "8" of the table lamp and an area identifier "A" of the living room.

Step 605: The server sends an update request to the terminal device.

The server records the area to which the table lamp actually belongs, and after determining that the app is started, sends the update request to the terminal device. The update request is used to indicate that the area to which the table lamp actually belongs is the living room.

Step 606: The terminal device displays prompt information on a display interface based on the update request.

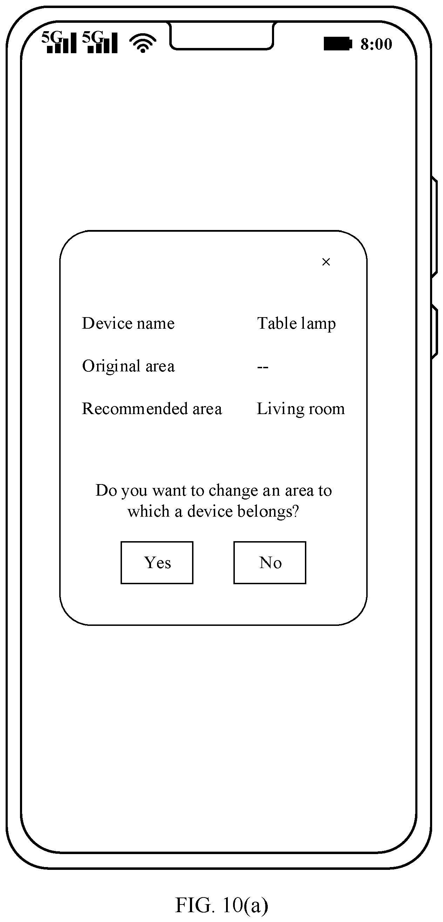

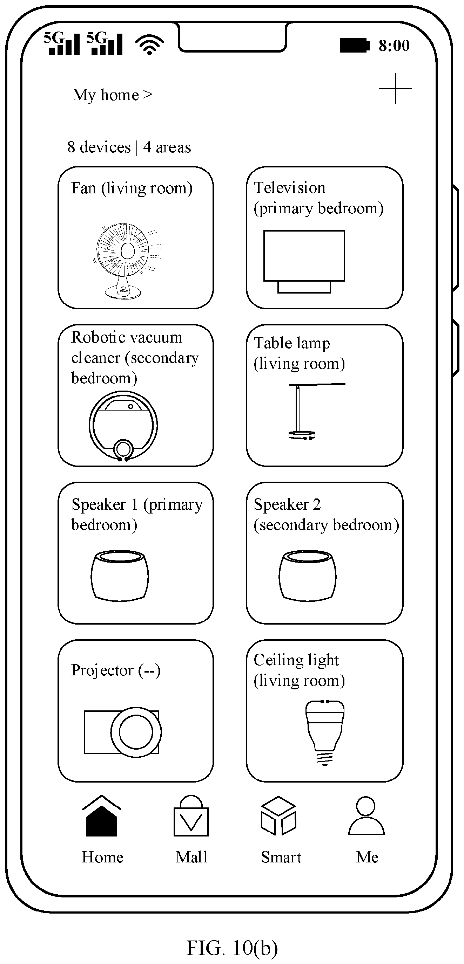

In response to the update request, the terminal device displays the prompt information on the display interface. The prompt information is used to prompt the user whether to update, to the living room, the area to which the table lamp belongs in the system device information. FIG. 10(a) and FIG. 10(b) are schematic diagrams of a set of display interfaces of a terminal device according to this application. As shown in FIG. 10(a), the prompt information is displayed on the display interface, and the prompt information specifically indicates "A device name is the table lamp, an original area is blank, a recommended area is the living room, and whether to change the area to which the device belongs". For example, "--" on the display interface indicates blank, and the user taps "Yes" or "No" on the display interface.

Step 607: The terminal device sends an update response to the server.

The update response may include a first response and a second response. The first response indicates the server to update the area to which the table lamp belongs in the system device information stored in the server to the living room, and the second response indicates the server not to update, to the living room, the area to which the table lamp belongs in the system device information stored in the server (the area to which the table lamp belongs in the original system device information remains unchanged).

In an example, the user taps "Yes" on the display interface in FIG. 10(a), and the terminal device sends the first response to the server in response to the user indication. In addition, in response to the user instruction, the terminal device may further update, to the living room, the area to which the table lamp belongs on the display interface, as shown in FIG. 10(b).

In another example, the user taps "No" on the display interface in FIG. 10(a), and the terminal device sends the second response to the server in response to the user indication. Alternatively, the user chooses to skip an operation for the prompt information (taps "×" on the display interface) on the display interface; or if the user does not select "Yes" or "No" within a preset time, the terminal device may also send the second response to the server.

Step 608: The server determines that the update response is the first response, and updates, to the living room, the area to which the table lamp belongs in the system device information stored in the server.

The server receives the update response from the terminal device. If it is determined that the update response is the first response, the server updates, to the living room, the area to which the table lamp belongs in the system device information stored in the server. If it is determined that the update response is the second response, the area to which the table lamp belongs in the original system device information stored in the server remains unchanged.

In some embodiments, if the robotic vacuum cleaner is directly connected to the terminal device, the robotic vacuum cleaner may directly send the update request to the terminal device. Correspondingly, the terminal device displays the prompt information on the display interface based on the update request. The user determines, based on the prompt information, whether to update, to the living room, the area to which the table lamp belongs in the system device information. If the user taps "Yes" on the display interface, the terminal device may send the first response to the server in response to the user indication. Herein, the first response is further used to indicate that the area to which the table lamp actually belongs is the living room.

In some embodiments, the server may alternatively directly update, to the living room, the area to which the table lamp belongs in the system device information. After determining that the app is started, the server sends updated system device information to the terminal device, and the terminal device displays the updated system device information.

The foregoing uses the table lamp as an example to describe in detail an implementation in which the robotic vacuum cleaner detects, in the living room, that the area to which the table lamp belongs is not correctly recorded in the system device information, and updates the area to which the table lamp belongs in the system device information. The following uses an Internet of Things device, namely, a fan, as an example to further describe an implementation in which the robotic vacuum cleaner correctly records an area to which the device belongs in the system device information.

The robotic vacuum cleaner sends a scanning signal in the living room, and the scanning signal may also be received by the fan in the living room. In response to the scanning signal, the fan sends an answer signal to the robotic vacuum cleaner. The robotic vacuum cleaner determines, based on the answer signal sent by the fan, that the fan is in the living room. Then, the robotic vacuum cleaner determines a device identifier of the fan. The robotic vacuum cleaner determines, based on the device identifier of the fan and the system device information, that an area to which the fan belongs and that is recorded in the system device information is the living room. The robotic vacuum cleaner determines that an area to which the fan actually belongs is the same as the area to which the fan belongs and that is recorded in the system device information, and it is determined that the area to which the fan belongs and that is recorded in the system device information is correct. For specific implementation in this embodiment of this application, refer to the description in the embodiments related to FIG. 6, FIG. 8, and FIG. 9. Details are not described herein again.

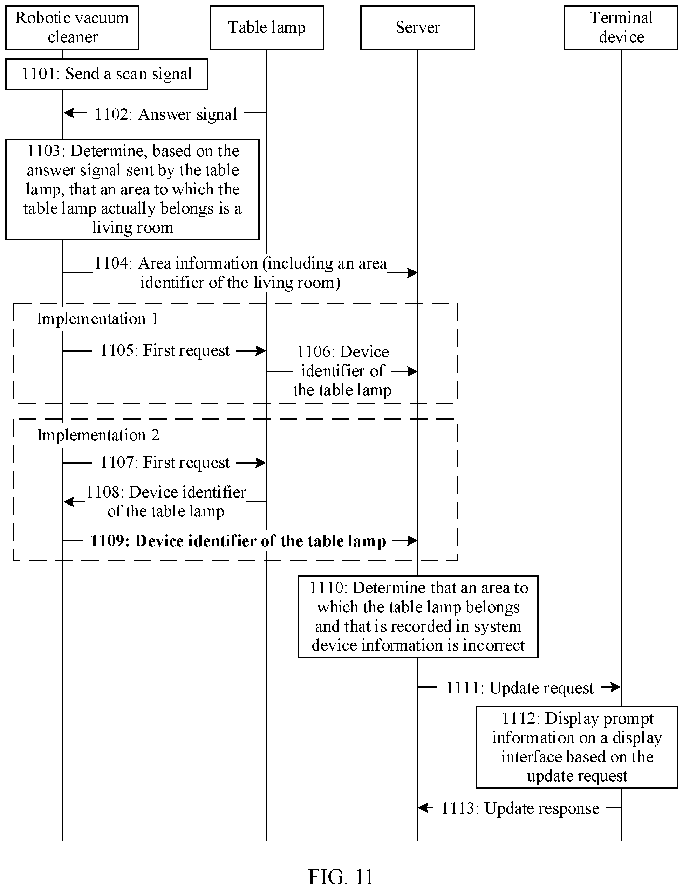

The foregoing describes in detail an implementation in which the robotic vacuum cleaner verifies whether an area to which an Internet of Things device belongs in the system device information is correct. This application further provides an implementation in which a server verifies whether an area to which an Internet of Things device belongs in system device information is correct. For details, refer to a schematic flowchart of another device management method shown in FIG. 11.

For ease of description, an Internet of Things device, namely, a table lamp, is still used as an example.

Step 1101: A robotic vacuum cleaner sends a scanning signal.

Step 1102: The table lamp sends an answer signal to the robotic vacuum cleaner.

Step 1103: The robotic vacuum cleaner determines, based on the answer signal sent by the table lamp, that the area to which the table lamp actually belongs is a living room.

Herein, the robotic vacuum cleaner receives the answer signal. Because the answer signal does not include identity information of the table lamp, the robotic vacuum cleaner cannot determine that an Internet of Things device that sends the answer signal is the table lamp. The robotic vacuum cleaner determines, based on the answer signal, that the Internet of Things device that sends the answer signal is in the living room.

Step 1104: The robotic vacuum cleaner sends area information to the server. The area information is used to indicate an area to which the robotic vacuum cleaner currently belongs. Herein, the robotic vacuum cleaner and the table lamp belong to a same area. Therefore, the area information is further used to indicate an area to which the table lamp actually belongs. For example, the area information includes an area identifier of the living room, and the area information is used to indicate that both the robotic vacuum cleaner and the table lamp are in the living room.

The robotic vacuum cleaner may further send a device identifier of the table lamp to the server, or indicate the table lamp to send the device identifier of the table lamp to the server. There may be two implementations below.

For details of Implementation 1, refer to step 1105 and step 1106 in FIG. 11.

Step 1105: The robotic vacuum cleaner sends a first request to the table lamp, where the first request is used to indicate the table lamp to send the device identifier of the table lamp to the server.

Step 1106: The table lamp sends the device identifier of the table lamp to the server based on the first request.

For details of Implementation 2, refer to step 1107 to step 1109 in FIG. 11.

Step 1107: The robotic vacuum cleaner sends a first request to the table lamp, where the first request is used by the robotic vacuum cleaner to request the device identifier of the table lamp from the table lamp.

Step 1108: The table lamp sends the device identifier of the table lamp to the robotic vacuum cleaner based on the first request. The table lamp and the robotic vacuum cleaner may agree on key information in advance. For example, the robotic vacuum cleaner may record a public key of the table lamp. The table lamp encrypts the device identifier of the table lamp by using the private key of the table lamp, generates encrypted information, and sends the encrypted information to the robotic vacuum cleaner. The robotic vacuum cleaner decrypts the encrypted information from the table lamp based on the public key of the table lamp, to obtain the device identifier of the table lamp.

Step 1109: The robotic vacuum cleaner sends the device identifier of the table lamp to the server.

Based on the foregoing Implementation 1 or Implementation 2, the server may obtain the device identifier of the table lamp and the area information, and then performs the following step 1110.

Step 1110: The server determines that the area to which the table lamp belongs and that is recorded in the system device information is incorrect.

The server determines, based on the area information and the device identifier of the table lamp, that the robotic vacuum cleaner detects the table lamp in the living room. The server determines, from the system device information based on the device identifier of the table lamp, that the area to which the table lamp belongs and that is recorded in the system device information is blank, determines that the area is inconsistent with the area, namely the living room, to which the table lamp actually belongs, and then determines that the area to which the table lamp belongs and that is recorded in the system device information is incorrect.

Step 1111: The server sends an update request to a terminal device.

Step 1112: The terminal device displays prompt information on a display interface based on the update request.

Step 1113: The terminal device sends an update response to the server.

For an implementation that is not described in detail in this embodiment of this application, refer to the description in the embodiments related to FIG. 6, FIG. 8, and FIG. 9.

In this embodiment of this application, an execution sequence of step 1104 and Implementation 1 is not limited. Step 1104 may be performed before Implementation 1, or Implementation 1 may be performed before step 1104.

Similarly, an execution sequence of step 1104 and Implementation 2 is not limited. Step 1104 may be performed before Implementation 2, or Implementation 2 may be performed before step 1104. In addition, in some embodiments, the robotic vacuum cleaner may separately send the device identifier of the table lamp to the server in step 1109, or may send the device identifier of the table lamp and the area information together to the server in step 1104.

In this embodiment of this application, information exchange between the server and the robotic vacuum cleaner, between the robotic vacuum cleaner and the table lamp, and between the server and the table lamp may be reduced on the premise of ensuring security.

It should be noted that the foregoing merely uses an Internet of Things device, namely, the table lamp or the fan, as an example. Certainly, the Internet of Things device may alternatively be another Internet of Things device in the living room, for example, a projector, a ceiling light, or a speaker 1 in FIG. 1. The table lamp or the fan is merely an example for description in this application.

It should be further noted that the foregoing merely uses an example in which the robotic vacuum cleaner is in the living room. If the robotic vacuum cleaner moves to another area, for example, a primary bedroom, the robotic vacuum cleaner sends a scanning signal in the primary bedroom. The robotic vacuum cleaner may first determine, based on a received answer signal sent by an Internet of Things device, whether the Internet of Things device is in the primary bedroom, and then determine whether an area to which the Internet of Things device belongs and that is recorded in the system device information is correct.

The robotic vacuum cleaner may traverse all areas based on a preset path or a random path, to determine whether areas to which all Internet of Things devices belong in the system device information are correctly recorded.

For example, with reference to FIG. 1, a moving path of the robotic vacuum cleaner is secondary bedroom → living room → primary bedroom → balcony. The robotic vacuum cleaner obtains the system device information from the server, and the system device information is shown in Table 1. The robotic vacuum cleaner may verify, based on the following process, whether an area to which each Internet of Things device belongs and that is recorded in the system device information is correct.

Step 1: The robotic vacuum cleaner determines whether an area to which an Internet of Things device in the secondary bedroom belongs is correctly recorded in the system device information.

The robotic vacuum cleaner sends a scanning signal in the secondary bedroom, and the robotic vacuum cleaner receives answer signals sent by a plurality of Internet of Things devices, and determines, based on signal strengths of the answer signals sent by the Internet of Things devices, that the Internet of Things device disposed in the secondary bedroom includes a speaker 2.

The robotic vacuum cleaner determines, based on a device identifier "6" corresponding to the speaker 2, that an area to which the speaker 2 belongs in the system device information is the secondary bedroom, which is consistent with an actually determined area.

Step 2: The robotic vacuum cleaner determines whether an area to which an Internet of Things device in the living room belongs is correctly recorded in the system device information.

The robotic vacuum cleaner sends a scanning signal in the living room. The robotic vacuum cleaner receives answer signals sent by a plurality of Internet of Things devices, and determines, based on signal strengths of the answer signals sent by the Internet of Things devices, that the Internet of Things device disposed in the living room includes the fan, the table lamp, the ceiling light, the projector, and the speaker 1.

Step (1): The robotic vacuum cleaner determines, based on a device identifier "1" corresponding to the fan, that an area to which the fan belongs in the system device information is the living room, which is consistent with an actually determined area.

Step (2): The robotic vacuum cleaner determines, based on a device identifier "8" corresponding to the table lamp, that an area to which the table lamp belongs in the system device information is blank, which is inconsistent with an actually determined area, and requests the server to update, to the living room, the area to which the table lamp belongs in the system device information stored in the server.

Step (3): The robotic vacuum cleaner determines, based on a device identifier "2" corresponding to the ceiling light, that an area to which the ceiling light belongs in the system device information is the living room, which is consistent with an actually determined area.

Step (4): The robotic vacuum cleaner determines, based on a device identifier "7" corresponding to the projector, that an area to which the projector belongs in the system device information is blank, which is inconsistent with an actually determined area, and requests the server to update, to the living room, the area to which the projector belongs in the system device information stored in the server.

Step (5): The robotic vacuum cleaner determines, based on a device identifier "4" corresponding to the speaker 1, that an area to which the speaker 1 belongs in the system device information is the primary bedroom, which is inconsistent with an actually determined area, and requests the server to update, to the living room, the area to which the speaker 1 belongs in the system device information stored in the server.

Step 3: The robotic vacuum cleaner determines whether an area to which an Internet of Things device in the primary bedroom belongs is correctly recorded in the system device information.

The robotic vacuum cleaner sends a scanning signal in the primary bedroom, and the robotic vacuum cleaner receives answer signals sent by a plurality of Internet of Things devices, and determines, based on signal strengths of the answer signals sent by the Internet of Things devices, that the Internet of Things device disposed in the primary bedroom includes a television.

The robotic vacuum cleaner determines, based on a device identifier "3" corresponding to the television, that an area to which the television belongs in the system device information is the primary bedroom, which is consistent with an actually determined area.

Step 4: The robotic vacuum cleaner determines whether an area to which an Internet of Things device in the balcony belongs is correctly recorded in the system device information.

The robotic vacuum cleaner sends a scanning signal in the balcony, and the robotic vacuum cleaner receives answer signals sent by a plurality of Internet of Things devices, and determines, based on signal strengths of the answer signals sent by the Internet of Things devices, that no Internet of Things device is disposed in the balcony.

It should be noted that, in step 1 to step 4, the robotic vacuum cleaner sends a scanning signal in any area, and an Internet of Things device in another area may receive the scanning signal. For example, in step 1, the robotic vacuum cleaner sends a scanning signal in the secondary bedroom, and the speaker 2 disposed in the secondary bedroom may receive the scanning signal, and another Internet of Things device disposed in the living room or the primary bedroom, for example, the fan, the ceiling light, or the speaker 1, may also receive the scanning signal.

It should be further noted that, if the robotic vacuum cleaner determines that areas to which a plurality of Internet of Things devices belong are not correctly recorded in the system device information, the robotic vacuum cleaner may send an update indication to the server for each Internet of Things device, or may send an update indication for the plurality of Internet of Things devices.

In a latter case, the update indication includes an identifier of each of the plurality of Internet of Things devices and an identifier of an area to which the Internet of Things device actually belongs. With reference to the foregoing example, the update indication includes the device identifier "7" of the projector and an area identifier "A" of the living room, the device identifier "8" of the table lamp and the area identifier "A" of the living room, and the device identifier "4" of the speaker 1 and the area identifier "A" of the living room.

In the foregoing embodiment, the robotic vacuum cleaner obtains the system device information from the server, and the system device information records areas to which all Internet of Things devices in the entire Internet of Things system belong. In another implementation, the system device information obtained by the robotic vacuum cleaner from the server may include device information of all Internet of Things devices in an area in which the robotic vacuum cleaner is located.

For example, when the robotic vacuum cleaner sends a third request to the server, the third request may further include an area in which the robotic vacuum cleaner is located. The server receives the third request, and sends, to the robotic vacuum cleaner based on the area in which the robotic vacuum cleaner is located in the third request, device information (which may be referred to as area device information for short below) including all Internet of Things devices in the area in which the robotic vacuum cleaner is located.

For example, still with reference to FIG. 1 and FIG. 2, the robotic vacuum cleaner is in the living room, and the area device information obtained by the robotic vacuum cleaner from the server is shown in Table 2.

**Table 2**

| Internet of Things device | Device identifier | Area | Area identifier |
|---|---|---|---|
| Fan | 1 | Living room | A |
| Ceiling light | 2 | Living room | A |

For an implementation in which the robotic vacuum cleaner determines, based on the answer signal, whether the area to which the Internet of Things device belongs and that is recorded in the area device information is correct, refer to step 603.

It should be added that, the robotic vacuum cleaner is in the living room, and the robotic vacuum cleaner detects the speaker 1 in the living room, but the speaker 1 is not recorded in area device information corresponding to the living room. In this case, the robotic vacuum cleaner sends, to the server, indication information "The speaker 1 is detected in the living room, but the speaker 1 is not recorded in the area device information corresponding to the living room".

Then, the robotic vacuum cleaner moves to the primary bedroom, and area device information corresponding to the primary bedroom indicates that both the television and the speaker 1 are in the primary bedroom, but the robotic vacuum cleaner does not detect the speaker 1 in the primary bedroom. In this case, the robotic vacuum cleaner sends, to the server, indication information "The speaker 1 is recorded in the area device information corresponding to the primary bedroom, but the speaker 1 is not detected in the primary bedroom".

The server may determine, based on the foregoing two pieces of indication information received from the robotic vacuum cleaner, that the speaker 1 is actually in the living room, and the server updates, from "the primary bedroom" to "the living room", the area to which the speaker 1 belongs in the system device information stored in the server.

In still another implementation, the system device information obtained by the robotic vacuum cleaner from the server may be specific to an Internet of Things device. For example, after determining that an Internet of Things device that sends the answer signal is the table lamp, the robotic vacuum cleaner may obtain, from the server, the area to which the table lamp belongs, and the robotic vacuum cleaner determines whether the area to which the table lamp actually belongs is consistent with an obtained area to which the table lamp belongs.

In the foregoing technical solution, the robotic vacuum cleaner may move to any one of a plurality of areas, and the robotic vacuum cleaner determines, based on a preset map and a moving path, the area in which the robotic vacuum cleaner is located. For any Internet of Things device, the robotic vacuum cleaner may perform short-range communication with the Internet of Things device, and then determine, with reference to the area in which the robotic vacuum cleaner is located, an area to which the Internet of Things device actually belongs. The robotic vacuum cleaner obtains the system device information from the server, and determines, based on an area to which the Internet of Things device actually belongs, whether the area to which the Internet of Things device belongs and that is recorded in the system device information obtained from the server is correct.

If the robotic vacuum cleaner determines that the area to which the Internet of Things device belongs and that is recorded in the system device information obtained from the server is incorrect, the robotic vacuum cleaner may indicate the server to update the area to which the Internet of Things device belongs in the system device information stored in the server. This helps improve accuracy of the area to which each Internet of Things device belongs and that is recorded in the system device information stored in the server, and avoid a problem that the terminal device cannot effectively control the Internet of Things device when a user sends a control instruction, especially a voice control instruction, to the terminal device.

Further, in a cleaning process, the robotic vacuum cleaner may indicate the server to update the area to which the Internet of Things device belongs in the system device information stored in the server. No new hardware module needs to be added in an entire system, and only an interactive interface is added to the original robotic vacuum cleaner and a software version is upgraded, thereby reducing costs.

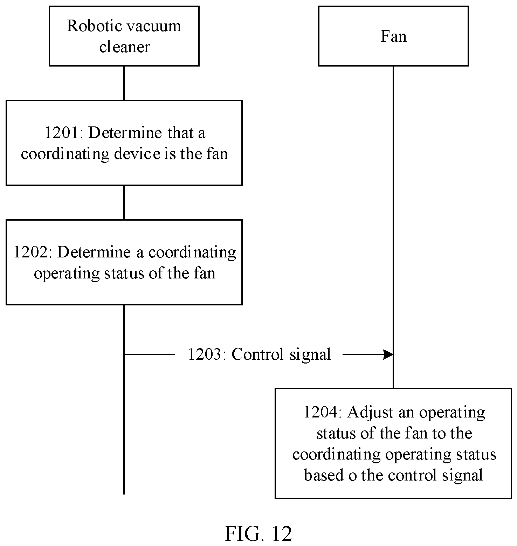

In addition, the robotic vacuum cleaner may further determine a coordinating device and a coordinated operating status of the coordinating device based on a location and a current operating status of the robotic vacuum cleaner. For example, the robotic vacuum cleaner is in the living room, and the coordinating device is the fan. FIG. 12 is a schematic flowchart of a method for controlling a coordinating device according to an example of this application.

Step 1201: A robotic vacuum cleaner determines that the coordinating device is a fan.

When entering a living room, the robotic vacuum cleaner may determine that the coordinating device in the living room is the fan. Alternatively, when the robotic vacuum cleaner cleans in the living room and moves to a location at which a distance from the fan is less than a first preset distance, it is determined that the coordinating device is the fan.

Specifically, the robotic vacuum cleaner may determine, based on an operating status of the robotic vacuum cleaner, a coordinating device to be coordinated. For example, when the robotic vacuum cleaner is in a cleaning state, it is determined that the coordinating device is the fan.

Step 1202: The robotic vacuum cleaner determines a coordinated operating status of the fan.

The robotic vacuum cleaner may obtain a current operating status of the fan, and then determine whether the current operating status of the fan is consistent with the coordinated operating status of the fan. If the current operating status of the fan is inconsistent with the coordinated operating status of the fan, the following step 1203 is performed. For example, if the current operating status of the fan is "Second-level wind, oscillating", and the robotic vacuum cleaner determines that the coordinated operating status of the fan is "Still", the robotic vacuum cleaner determines that the current operating status of the fan needs to be adjusted from "Second-level wind, oscillating" to the coordinated operating status "Still".

The robotic vacuum cleaner may obtain the current operating status of the fan from a server or a central system. A device status of an Internet of Things device is stored in the central system, which helps ensure data security of the Internet of Things device.

Step 1203: The robotic vacuum cleaner sends a control signal to the fan.

The control signal is used to indicate the fan to adjust the current operating status to the coordinated operating status. For example, the control signal is used to indicate to adjust the current operating status of the fan to the coordinated operating status "Still".

Step 1204: The fan adjusts the operating status of the fan to the coordinated operating status based on the control signal.

For example, the fan adjusts the current operating status of the fan to "Still" based on the control signal.

In this embodiment, the coordinating device may alternatively be another device, for example, a smart bed, a smart air conditioner, or a purifier. For example, when moving to a location at which a distance from the smart bed is less than a second preset distance, it is determined that the smart bed needs to be raised. The robotic vacuum cleaner first obtains a current height of the smart bed. If the current height of the smart bed is less than a first preset height, the robotic vacuum cleaner sends, to the smart bed, a control signal used to indicate to raise the smart bed. After the smart bed is raised to a height greater than a second preset height based on the received control signal, the robotic vacuum cleaner starts to clean under the smart bed.

In this embodiment, the robotic vacuum cleaner may further determine, when leaving the living room, that the coordinating device is, for example, the purifier. The robotic vacuum cleaner determines that an operating status of the purifier needs to be set to "Enable a dust removal mode". The robotic vacuum cleaner first obtains a current operating status of the purifier. If the current operating status of the purifier is "Off", the robotic vacuum cleaner sends, to the purifier, a control signal used to indicate the purifier to enable a dust removal mode, and the purifier enables the dust removal mode based on the control signal sent by the robotic vacuum cleaner. Further, the robotic vacuum cleaner may further include, in the control signal, a preset duration for which the purifier is indicated to enable the dust removal mode, and the purifier is turned off after operating for the preset duration.

Based on the foregoing content and a same concept, an embodiment of this application provides a device management apparatus. For example, the apparatus may be a robotic vacuum cleaner 500 in FIG. 3, or another mobile device, or a component (for example, a chip or a circuit) of a mobile device.

The apparatus may include: one or more processors, one or more memories, and a transceiver. The one or more memories are coupled to the one or more processors, and the memory is configured to store data and instructions to be invoked by the processor. The processor is configured to perform, based on at least one or more programs in the memory, a method for a robotic vacuum cleaner in the embodiments related to FIG. 6, FIG. 8, FIG. 9, FIG. 11, and FIG. 12.

Based on the foregoing content and a same concept, an embodiment of this application discloses a device management apparatus. For example, the apparatus may be a server 100 in FIG. 3, or a central system 100, or a component (for example, a chip or a circuit) used in a server or a central system.

The apparatus may include: one or more processors, one or more memories, and a transceiver. The one or more memories are coupled to the one or more processors, and the memory is configured to store data and instructions to be invoked by the processor. The processor is configured to perform, based on at least one or more programs in the memory, a method for a server in the embodiments related to FIG. 6, FIG. 8, FIG. 9, FIG. 11, and FIG. 12.

Based on the foregoing content and a same concept, an embodiment of this application discloses a device management system. The system includes a robotic vacuum cleaner and a server in the embodiments related to FIG. 6, FIG. 8, FIG. 9, and FIG. 12. Alternatively, the system includes a robotic vacuum cleaner and a server in the embodiments related to FIG. 11 and FIG. 12.

Based on the foregoing content and a same concept, an embodiment of this application further provides a computer-readable storage medium. The computer-readable storage medium stores a computer program or instructions. When the computer program or the instructions are executed by a device management apparatus, the device management apparatus is enabled to perform the method for a robotic vacuum cleaner in the embodiments related to FIG. 6, FIG. 8, FIG. 9, FIG. 11, and FIG. 12, or the method for a server in the embodiments related to FIG. 6, FIG. 8, FIG. 9, FIG. 11, and FIG. 12.

In addition, an embodiment of this application further provides an apparatus. The apparatus may be specifically a chip, a component, or a module. The apparatus may include a processor and a memory that are connected. The memory is configured to store computer executable instructions. When the apparatus runs, the processor may execute the computer executable instructions stored in the memory, to enable the chip to perform a method for a robotic vacuum cleaner in the embodiments related to FIG. 6, FIG. 8, FIG. 9, FIG. 11, and FIG. 12.

The device management apparatus, the computer storage medium, the computer program product, or the chip provided in the embodiments of this application is configured to perform a corresponding method provided above. Therefore, for beneficial effects that can be achieved by the device management apparatus, the computer storage medium, the computer program product, or the chip, refer to beneficial effects in the corresponding methods provided above. Details are not described herein again.

Through description of the foregoing implementations, a person skilled in the art may understand that, for convenience and conciseness of description, only the division of the foregoing function modules is used as an example. In actual application, the foregoing functions may be allocated to and completed by different function modules as required, that is, an internal structure of the apparatus is divided into different function modules to complete all or some of the functions described above.

In the several embodiments provided in this application, it should be understood that the disclosed apparatus and method may be implemented in other manners. For example, the described apparatus embodiment is merely an example. For example, the module or unit division is merely logical function division, and may be other division in actual implementation. For example, a plurality of units or components may be combined or may be integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may be one or more physical units, that is, may be located in one place, or may be distributed in a plurality of different places. Some or all of the units may be selected based on actual requirements to achieve the objectives of the solutions of embodiments.

In addition, function units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of the embodiments of this application essentially, or the part contributing to the prior art, or all or some of the technical solutions may be implemented in a form of a software product. The software product is stored in a storage medium and includes several instructions for instructing a device (which may be a single-chip microcomputer, a chip, or the like) or a processor (processor) to perform all or some of steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A device management method, comprising:
sending, by a first device, a scanning signal;
receiving, by the first device, an answer signal sent by an answering device in response to the scanning signal; and
determining, by the first device based on the answer signal, that an area to which the answering device belongs and that is recorded in system device information obtained by the first device from a second device is incorrect, and sending an update indication to the second device, wherein the update indication is used to indicate the second device to update the area to which the answering device belongs and that is recorded in the system device information stored in the second device.

2. The method according to claim 1, wherein the determining, by the first device based on the answer signal, that an area to which the answering device belongs and that is recorded in system device information obtained by the first device from a second device is incorrect comprises:
determining, by the first device based on the answer signal, an area to which the answering device actually belongs; and
obtaining, by the first device, device information of the answering device, and determining, based on the device information of the answering device, that the area to which the answering device belongs and that is recorded in the system device information obtained by the first device from the second device is inconsistent with the area to which the answering device actually belongs.

3. The method according to claim 2, wherein the obtaining, by the first device, device information of the answering device comprises:
obtaining, by the first device, first information from the answering device, wherein the first information comprises a public key and storage location information;
obtaining, by the first device based on the storage location information, encrypted information from the second device, wherein the encrypted information is obtained by encrypting the device information of the answering device by the second device; and
decrypting, by the first device based on the public key, the encrypted information, to obtain the device information of the answering device.

4. The method according to claim 3, wherein the obtaining, by the first device, first information from the answering device comprises:
sending, by the first device, a first request to the answering device, wherein the first request is used to indicate the answering device to send the device information of the answering device to the second device; and
receiving, by the first device, the first information from the answering device.

5. The method according to claim 3, wherein the obtaining, by the first device based on the storage location information, encrypted information from the second device comprises:
sending, by the first device, a second request to the second device, wherein the second request comprises the storage location information, and the second request is used by the first device to request the encrypted information from the second device; and
receiving, by the first device, the encrypted information from the second device.

6. The method according to claim 2, wherein the determining, by the first device based on the answer signal, an area to which the answering device actually belongs comprises:
measuring, by the first device, a signal strength of the answer signal, and if it is determined that the signal strength of the answer signal is greater than a specified threshold, determining that the area to which the answering device actually belongs is the same as an area to which the first device belongs.

7. The method according to claim 2, wherein the sending, by the first device, an update indication to the second device comprises:
sending, by the first device, the update indication to the second device based on the device information of the answering device and the area to which the answering device actually belongs.

8. The method according to claim 1, wherein obtaining, by the first device, the system device information from the second device comprises:
sending, by the first device, a third request to the second device, wherein the third request comprises device information of the first device, and the third request is used by the first device to request the system device information from the second device; and
receiving, by the first device, the system device information from the second device.

9. The method according to claim 1, wherein the receiving, by the first device, an answer signal sent by an answering device in response to the scanning signal comprises:
receiving, by the first device, a plurality of answer signals, wherein any one of the plurality of answer signals comprises a temporary identifier of the answering device that sends the answer signal; and
determining, by the first device based on temporary identifiers in the plurality of answer signals, at least one answer signal from a same answering device.

10. The method according to claim 1, further comprising:
determining, by the first device, an operating mode of a coordinating device based on an operating mode of the first device; and
sending, by the first device to the coordinating device, a control signal that indicates the operating mode of the coordinating device.

11. The method according to claim 1, wherein the first device is a robotic vacuum cleaner.

12. The method according to claim 1, wherein the scanning signal is a short-range broadcast packet based on a constrained application protocol COAP.

13. A device management method, comprising:
receiving, by a second device, an update indication, wherein the update indication is sent by a first device after the first device determines that an area to which an answering device belongs and that is recorded in system device information obtained by the first device from the second device is incorrect; and
updating, by the second device based on the update indication, the area to which the answering device belongs and that is recorded in the system device information stored in the second device.

14. The method according to claim 13, wherein the method further comprises:
receiving, by the second device, device information of the answering device, encrypting the device information of the answering device by using a private key to obtain encrypted information, and sending second information to the answering device, wherein the second information comprises a public key for decrypting the encrypted information and storage location information of the encrypted information.

15. The method according to claim 14, wherein after the sending, by the second device, second information to the answering device, the method further comprises:
receiving, by the second device, a second request comprising the storage location information from the first device, and sending, based on the storage location information, the encrypted information to the first device.

16. The method according to claim 13, wherein the method further comprises:
receiving, by the second device, a third request from the first device, wherein the third request comprises device information of the first device, and the third request is used to request the system device information stored in the second device; and
determining, by the second device based on the device information of the first device in the third request, that a user to which the first device belongs is an authorized user, and sending the system device information stored in the second device to the first device.

17. The method according to claim 13, wherein the updating, by the second device based on the update indication, the area to which the answering device belongs and that is recorded in the system device information stored in the second device comprises:
updating, by the second device based on an area to which the answering device actually belongs in the update indication, the area to which the answering device belongs and that is recorded in the system device information stored in the second device.

18. The method according to claim 13, wherein before the updating, by the second device, the area to which the answering device belongs and that is recorded in the system device information stored in the second device, the method further comprises:
sending, by the second device, an update request to a terminal device based on the update indication, wherein the update request is used to indicate the terminal device to display prompt information, and the prompt information is used to prompt the user whether to agree to update the system device information stored in the second device; and
receiving, by the second device, an update response, wherein the update response is sent by the terminal device in response to a user instruction, and the update response indicates that the user agrees to update the system device information stored in the second device.

19. A device management method, comprising:
sending, by a first device, a scanning signal;
receiving, by the first device, an answer signal sent by an answering device in response to the scanning signal;
determining, by the first device based on the answer signal, an area to which the answering device actually belongs, and sending area information to a second device, wherein the area information comprises the area to which the answering device actually belongs; and
sending, by the first device, a first request to the answering device, and sending, by the first device, device information of the answering device to the second device, wherein the first request is used to indicate the answering device to send the device information of the answering device to the second device, or the first request is used by the first device to request the device information of the answering device from the answering device.

20. The method according to claim 19, wherein the determining, by the first device based on the answer signal, an area to which the answering device actually belongs comprises:
measuring, by the first device, a signal strength of the answer signal, and if it is determined that the signal strength of the answer signal is greater than a specified threshold, determining that the area to which the answering device actually belongs is the same as an area to which the first device belongs.

21. The method according to claim 19, further comprising:
determining, by the first device, an operating mode of a coordinating device based on an operating mode of the first device; and
sending, by the first device to the coordinating device, a control signal that indicates the operating mode of the coordinating device.

22. The method according to claim 19, wherein the receiving, by the first device, an answer signal sent by an answering device in response to the scanning signal comprises:
receiving, by the first device, a plurality of answer signals, wherein any one of the plurality of answer signals comprises a temporary identifier of the answering device that sends the answer signal; and
determining, by the first device based on temporary identifiers in the plurality of answer signals, at least one answer signal from a same answering device.

23. The method according to claim 19, wherein the first device is a robotic vacuum cleaner.

24. The method according to claim 19, wherein the scanning signal is a short-range broadcast packet based on a constrained application protocol COAP.

25. A device management method, comprising:
receiving, by a second device, area information from a first device, wherein the area information comprises an area to which an answering device actually belongs, and the area to which the answering device actually belongs is determined by the first device;
receiving, by the second device, device information of the answering device from the answering device or from the first device; and
updating, by the second device based on the device information of the answering device and the area information, an area to which the answering device belongs and that is recorded in system device information stored in the second device.

26. The method according to claim 25, wherein before the updating, by the second device, an area to which the answering device belongs and that is recorded in the system device information stored in the second device, the method further comprises:
sending, by the second device, an update request to a terminal device based on the update indication, wherein the update request is used to indicate the terminal device to display prompt information, and the prompt information is used to prompt the user whether to agree to update the system device information stored in the second device; and
receiving, by the second device, an update response, wherein the update response is sent by the terminal device in response to a user instruction, and the update response indicates that the user agrees to update the system device information stored in the second device.

27. A device management apparatus, comprising:
one or more processors, one or more memories, and a transceiver, wherein
the one or more memories are coupled to the one or more processors, and the memory is configured to store instructions that, when executed by the processor, cause the apparatus to:
perform the method according to any one of claims 1 to 12, or perform the method according to any one of claims 13 to 18, or perform the method according to any one of claims 19 to 24, or perform the method according to claim 25 or 26.

28. A computer-readable storage medium, wherein the computer-readable storage medium stores a computer program or instructions, and when the computer program or the instructions are executed by a communications apparatus, the method according to any one of claims 1 to 12 is implemented, or the method according to any one of claims 13 to 18 is performed, or the method according to any one of claims 19 to 24 is performed, or the method according to claim 25 or 26 is performed.

29. A device management system, comprising a first device configured to perform the method according to any one of claims 1 to 12, and a second device configured to perform the method according to any one of claims 13 to 18; or
comprising a first device configured to perform the method according to any one of claims 19 to 24, and a second device configured to perform the method according to claim 25 or 26.
